# EUROPEAN PATENT APPLICATION

(11) **EP 3 086 598 A1**
(43) Date of publication of application: **26.10.2016**
(21) Application number: 16162432.5
(22) Date of filing: 24.03.2016
(51) Int. Cl.: H04W 28/08, H04W 36/22, H04L 12/803, H04L 12/801, H04W 84/12, H04W 88/08

(54) **LOAD DISTRIBUTION IN A WIRELESS LAN SYSTEM**

(30) Priority: 20.04.2015 JP 2015085727
(71) Applicant: FUJITSU LIMITED, Kawasaki-shi, Kanagawa 211-8588 (JP)
(72) Inventor: NISHIGUCHI, Naoki, Kawasaki-shi, Kanagawa 211-8588 (JP)
(74) Representative: Haseltine Lake LLP

(57) **Abstract**

A communication method includes: receiving the identification information being detected by one or more terminals coupled to an apparatus through wireless communication; determining other apparatus which corresponds to the identification information and is different from the apparatus to be a connecting destination of a first terminal when wireless communication between the apparatus and the first terminal is cut off; notifying the first terminal of connecting destination information for coupling to the other apparatus; receiving notification information from the other apparatus in a case where the first terminal is coupled to the other apparatus based on the connecting destination information, the notification information indicating that the other apparatus is coupled with the first terminal; and determining whether or not wireless communication with a second terminal is to be cut off, based on the notification information, the second terminal being coupled to the apparatus.

## Description

The invention discussed herein is related to a communication method, a program, an information processing apparatus, and a system.

In a case where a small server such as a personal computer (PC), to which an access point of a wireless communication network is attached, provides a plurality of terminals with services, it is difficult that a wireless environment is prepared in a manner in which roaming has been performed in advance so as to hold a good wireless environment. In such a wireless environment, an increase of the number of terminals which use services of the server may cause coupling in wireless communication to become unstable.

### [CITATION LIST]

### [PATENT LITERATURES]

[PATENT LITERATURE 1] Japanese Laid-open Patent Publication No. 2000-99435
[PATENT LITERATURE 2] Japanese Laid-open Patent Publication No. 08-186618
[PATENT LITERATURE 3] Japanese Laid-open Patent Publication No. 2001-290719

In a case where coupling to a server in wireless communication becomes unstable, and thus an access attempt of a terminal to the server fails, it is considered that the server as a connecting destination is changed.

However, in a method in which a server as the connecting destination is switched at a point of time when an access attempt of a terminal to the server fails, a terminal that does not enable coupling to a connecting destination is in a state of not enabling the coupling through time, in a case where capacity for wireless coupling reaches a limit already. Switching of the connecting destination of the terminal in the middle of coupling is desirable to solve this problem. However, such switching is performed at a point of time when an access attempt of the terminal to the server fails. Accordingly, in this method, there is a high probability of continuously being in a situation in which load on wireless communication with the server is high.

According to an aspect of an embodiment of the invention, a communication method includes: first receiving, by an information processing apparatus, identification information of each wireless communication network, the identification information being detected by one or more terminals coupled to the information processing apparatus through wireless communication; first determining, by the information processing apparatus, other information processing apparatus which corresponds to the received identification information and is different from the information processing apparatus to be a connecting destination of a first terminal when wireless communication between the information processing apparatus and the first terminal among the one or more terminals is cut off; first notifying, by the information processing apparatus, the first terminal of connecting destination information for coupling to the other information processing apparatus; second receiving, by the information processing apparatus, notification information from the other information processing apparatus in a case where the first terminal is coupled to the other information processing apparatus based on the connecting destination information, the notification information indicating that the other information processing apparatus is coupled with the first terminal; and second determining, by the information processing apparatus, whether or not wireless communication with a second terminal among the one or more terminals except for the first terminal is to be cut off, based on the notification information, the second terminal being coupled to the information processing apparatus.

It is desirable to solve a situation in which a wireless communication is unstable. The invention is described, by way of example only, with reference to the following drawings, in which:
FIG. 1 illustrates a system configuration example of an embodiment;
FIG. 2 illustrates a hardware configuration example of a server in the embodiment;
FIG. 3 illustrates a functional configuration example of a terminal and the server in the embodiment;
FIG. 4 is a diagram illustrating a process performed in a case where a terminal is normally coupled with an original server;
FIG. 5 is a diagram illustrating a process performed in a case where a terminal with which wireless communication has been cut off performs switching and coupling;
FIG. 6 is a flowchart illustrating an example of processing procedures performed by a connecting management unit when coupling to the server is performed;
FIG. 7 illustrates a configuration example of a connecting destination information storage unit;
FIG. 8 is a flowchart illustrating an example of processing procedures by the connecting management unit after coupling with the server is performed;
FIG. 9 illustrates a configuration example of connecting destination-at-cutoff information;
FIG. 10 is a flowchart illustrating an example of processing procedures performed by a terminal proxy unit;
FIG. 11 is a flowchart illustrating an example of processing procedures performed by a terminal connecting management unit;
FIG. 12 illustrates a configuration example of terminal connecting information;
FIG. 13 illustrates a configuration example of an SSID/server correspondence storage unit;
FIG. 14 is a flowchart illustrating an example of processing procedures performed by a connecting-state synchronization unit;
FIG. 15 illustrates a configuration example of terminal connecting-state information;
FIG. 16 is a flowchart illustrating an example of processing procedures performed by a connecting-destination determination unit;
FIG. 17 is a flowchart illustrating an example of processing procedures performed by a server proxy unit;
FIG. 18 illustrates a configuration example of a service-destination information storage unit; and
FIG. 19 is a flowchart illustrating an example of processing procedures performed by the server proxy unit in accordance with recovery of a service.

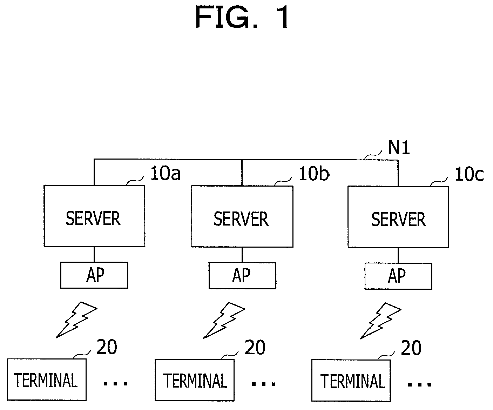

Hereinafter, an embodiment will be described with reference to the accompanying drawings. FIG. 1 illustrates a system configuration example of the embodiment. In FIG. 1, a plurality of servers 10 of a server 10a, a server 10b, a server 10c, and the like corresponds to computers such as personal computers (PC), which are respectively disposed in fixed sections. An interval between the servers 10 may vary. Each of the servers 10 is coupled to an access point AP for wireless communication, which is exclusively used for the corresponding server. That is, each of the servers 10 and each of access points AP form a pair. For example, each of the access points AP may be built in each of the servers 10. Each of the servers 10 can provide a predetermined service for a terminal 20 which is in a range of radio waves of the corresponding access point AP. Services provided by the servers 10 may be the same or different from each other. The servers 10 are coupled to each other through a network N1 such as a local area network (LAN), so as to enable communication with each other.

For example, the servers 10 may be respectively disposed in classrooms, in a case where this system is operated in a school. In this case, each of the servers 10 may provide a learning service. Terminals 20 may be respectively used by students. Examples of the terminal 20 include a smart phone, a tablet terminal, a personal computer (PC), and the like. The servers 10 may be used in places other than the school. For example, the servers 10 may be disposed in fixed sections such as stores and event sites. In this case, each of the servers 10 may provide the terminal 20 with a list of goods or events which are handled in the section in which the corresponding server 10 (own server 10) is disposed.

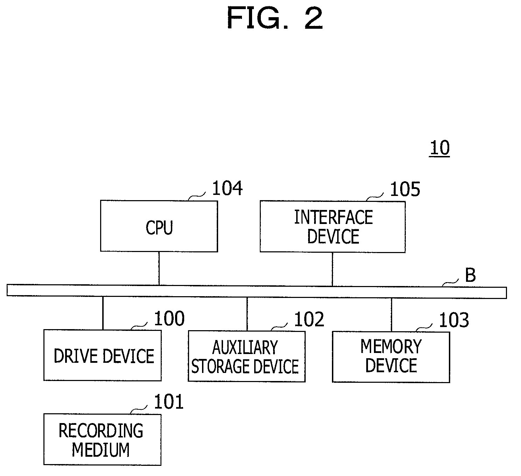

FIG. 2 illustrates a hardware configuration example of the server in the embodiment. In FIG. 2, the server 10 includes a drive device 100, an auxiliary storage device 102, a memory device 103, a CPU 104, an interface device 105, and the like which are coupled to each other through a bus B.

A program which executes processes in the server 10 is provided by a recording medium 101. If the recording medium 101 in which the program is recorded is set in the drive device 100, the program is installed on the auxiliary storage device 102 from the recording medium 101 through the drive device 100. The installation of the program is not necessarily performed through the recording medium 101, and the program may be installed by downloading the program from other computers through a network. The auxiliary storage device 102 stores the installed program and stores desirable files, data or the like.

The memory device 103 reads the program from the auxiliary storage device 102 and stores the read program, in a case where an instruction for starting the program is received. The CPU 104 performs functions relating to the server 10, in accordance with the program stored in the memory device 103. The interface device 105 is used as an interface for coupling to the network.

Examples of the recording medium 101 include a portable recording medium such as a CD-ROM, a DVD disc, or a USB memory. Examples of the auxiliary storage device 102 include a hard disk drive (HDD) and a flexible memory. Any of the recording medium 101 and the auxiliary storage device 102 corresponds to a computer-readable recording medium.

The terminal 20 also includes hardware as illustrated in FIG. 2. It is desirable that the terminal 20 includes a display device such as a liquid display, or an input device such as a touch panel, a keyboard, or a mouse.

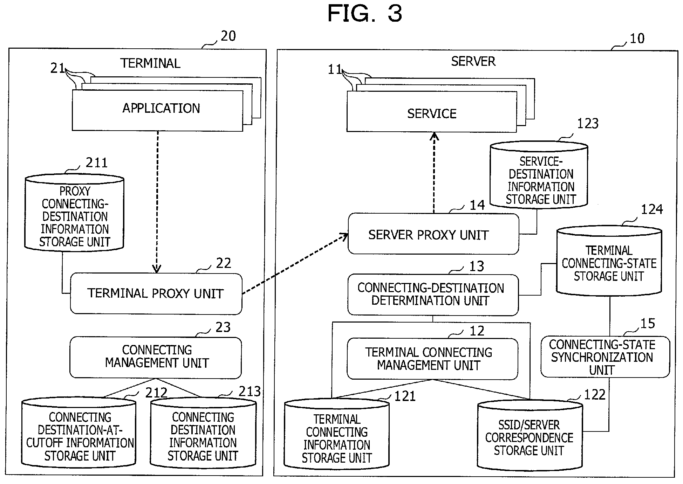

FIG. 3 illustrates a functional configuration example of the terminal and the server in the embodiment. In FIG. 3, the terminal 20 includes a terminal proxy unit 22 and a connecting management unit 23. The program installed on the terminal 20 is executed by the CPU of the terminal 20, and thereby these units are realized. The terminal 20 includes a proxy connecting-destination information storage unit 211, a connecting destination-at-cutoff information storage unit 212, a connecting destination information storage unit 213, and the like. These storage units may be realized by using a memory of the terminal 20 or the auxiliary storage device of the terminal 20, for example. In the terminal 20, one or more applications 21 are operated.

Each of the applications 21 corresponds to an application program. Each of the applications 21 causes the service 11 operated by the server 10 to be performed and used in the terminal 20.

The terminal proxy unit 22 relays an access request (use request) for the service 11 from the application 21 to the server proxy unit 14 of any one of the servers 10. Destination information (below, "proxy connecting-destination") of the server proxy unit 14 which is a relay destination is stored in the proxy connecting-destination information storage unit 211. The proxy connecting-destination stored in the proxy connecting-destination information storage unit 211 is rewritten in accordance with a state of the wireless communication network of the server 10. The proxy connecting-destination corresponds to a uniform resource locator (URL), for example.

The connecting management unit 23 manages coupling with the server 10 through wireless communication. The connecting destination information storage unit 213 stores destination information (address information) of the server 10 (referred to as "an original server 10" below) which is desirable to be set as a first connecting destination by the terminal 20, in advance. Thus, coupling to the server 10 relating to the destination information stored in the connecting destination information storage unit 213 is performed by the connecting management unit 23, when coupling is performed for the first time. The connecting destination-at-cutoff information storage unit 212 stores information which indicates the server 10 which is set as a switching destination (referred to as "a connecting destination-at-cutoff" below) for wireless coupling in a case where the wireless coupling with the server 10 as the connecting destination is cut off. Notification of this information is performed from the original server 10.

The server 10 includes a terminal connecting management unit 12, a connecting-destination determination unit 13, a server proxy unit 14, a connecting-state synchronization unit 15, and the like. One or more programs installed on the server 10 are executed by the CPU 104, and thereby these units are realized. In the server 10, a terminal connecting information storage unit 121, an SSID/server correspondence storage unit 122, a service-destination information storage unit 123, a terminal connecting-state storage unit 124, and the like are used. These storage units may be realized by using the memory device 103 or the auxiliary storage device 102 included in the server 10, a storage device which is allowed to be coupled to the server 10 through a network, and the like. The server 10 operates one or more services 11.

Each of the services 11 corresponds to the service 11 provided for the terminal 20. The terminal connecting management unit 12 manages coupling with the terminal 20 which uses the service 11 of the own server 10, through wireless communication. The terminal connecting information storage unit 121 stores, for example, information which indicates the server 10 set as a connecting destination or a connecting destination-at-cutoff of the terminal 20, for each of the terminals 20 coupled to the own server 10. The SSID/server correspondence storage unit 122 stores, for example, correspondence information between an SSID and the server 10.

The connecting-destination determination unit 13 determines the server 10 acting as a connecting destination-at-cutoff of the terminal 20 coupled to the own server 10 or determines whether or not it is desirable to cut off the wireless communication with the terminal 20, based on information stored in the terminal connecting-state storage unit 124. For example, the connecting-destination determination unit 13 determines that wireless communication with the own server 10 is cut off by some or all of terminals 20 which are coupled to the own server 10, in a case where it is detected, based on the information stored in the terminal connecting-state storage unit 124, that the number of terminals 20 in which wireless communication with the own server 10 is cut off exceeds a threshold value α. The terminal connecting-state storage unit 124 stores terminal connecting-state information for each terminal 20 which is coupled (referred to as "performing switching and coupling" below) to the server 10 defined as a connecting destination-at-cutoff, and accesses the service 11 of the original server 10 via the server 10 set as the connecting destination-at-cutoff. The terminal connecting-state information includes an SSID corresponding to the original server 10, an SSID corresponding to the server 10 set as a switching-and-connecting destination, a terminal ID of the terminal 20, and the like. The terminal ID corresponds to identification information of each terminal 20. The terminal 20 which accesses the service 11 of the original server 10 via the server 10 set as the connecting destination-at-cutoff corresponds to the terminal 20 in which the wireless coupling with the original server 10 is cut off. Thus, it is possible to recognize the number of terminals 20 in which the wireless coupling with the original server 10 is cut off, by referring to the terminal connecting-state storage unit 124.

The server proxy unit 14 relays the access request for the service 11 (use request for the service 11), which is transmitted from the terminal proxy unit 22 of the terminal 20, to the service 11 set as an access destination? (service 11 as a use target). In a case where using the service 11 which is set as the access destination? is not allowed, the server proxy unit 14 causes the service 11 to be operated by the other server 10 so as to cause the service 11 to be redundant, and relays the access request to the service 11 set as the redundancy destination. The service-destination information storage unit 123 stores information which indicates a relay destination of an access request to each of the services 11.

In a case where the terminal 20 performs switching and coupling to the own server 10, the connecting-state synchronization unit 15 transmits information which includes the terminal ID of a terminal 20 when notifying that switching and coupling thereof has been performed, an SSID corresponding to the own server 10, and an SSID corresponding to the original server 10 which is set as a connecting destination of the terminal 20 before switching and coupling. If the connecting-state synchronization unit 15 in the other server 10 receives the transmitted information, the connecting-state synchronization unit 15 in the other server 10 generates terminal connecting-state information corresponding to the received information, and stores the generated terminal connecting-state information in the terminal connecting-state storage unit 124. The connecting-state synchronization unit 15 transmits a request for not using the own server 10 as the connecting destination-at-cutoff, to the connecting-state synchronization unit 15 of another server 10 in a case where it is determined that wireless communication of the terminal with own server 10 is unstable.

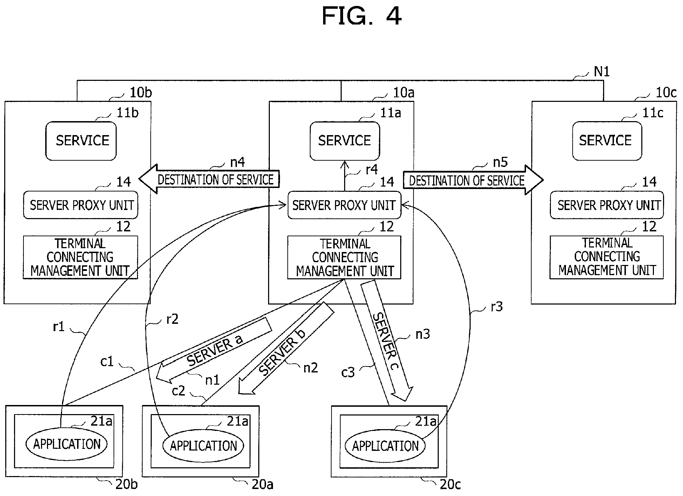

The outline of a process performed in the system illustrated in FIG. 1 will be described. FIG. 4 is a diagram illustrating a process performed in a case where the terminal is normally coupled to the original server. In FIG. 4, for convenience, the disposition relationship between the servers 10 is different from that in FIG. 1. That is, the server 10a is disposed at the center of the servers 10. Pieces of destination information for services 11a, 11b, and 11c in each of the servers 10 are different from each other.

FIG. 4 illustrates a state where (the connecting management unit 23 of) each of terminals 20 including terminals 20a, 20b, and 20c, and the like is wirelessly coupled to the terminal connecting management unit 12 of the server 10a which is the original server 10 for the terminals 20 (c1 to c3). An application 21a of each of the terminals 20 transmits an access request for the service 11a, to the server proxy unit 14 of the server 10a (r1 to r3). Strictly, the access request for the service 11a is transmitted to the server proxy unit 14 through the terminal proxy unit 22. The server proxy unit 14 of the server 10a relays access requests from applications 21a to the service 11a (r4).

Each of the terminals 20 periodically transmits a list of SSIDs in radio waves for wireless communication detected by the terminal itself, to the server 10a after coupling to the server 10a. The connecting-destination determination unit 13 (not illustrated in FIG. 4) of the server 10a determines a server 10 acting as a connecting destination-at-cutoff for the terminal 20, for each of the terminals 20 based on the list of the SSIDs received from the terminal 20, and the connecting-destination determination unit 13 of the server 10a notifies each of the terminals 20 of connecting destination-at-cutoff information (n1 to n3) regarding the determinated server 10. FIG. 4 illustrates an example in which the terminal 20a and the terminal 20b are notified of "server b", and the terminal 20c is notified of "server c". The "server b" is set to be connecting destination information for the server 10b. The "server c" is set to be connecting destination information-at-cutoff for the server 10c. That is, FIG. 4 illustrates an example in which the server 10b is determined as the connecting destination-at-cutoff with regard to the terminals 20a and 20b, and the server 10c is determined as the connecting destination-at-cutoff with regard to the terminal 20c.

The server proxy unit 14 of the server 10a notifies server proxy units 14 of the servers 10b and 10c which are determined as the connecting destination-at-cutoff, of destination information (for example, a URL and the like) for the service 11a in accordance with a determination of the connecting-destination determination unit 13 (n4 and n5). In the embodiment, the server proxy unit 14 of each of the servers 10 conducts relay of only an access request for setting the service 11 which is operated in the own server 10, as an access destination in an initial state. Accordingly, in FIG. 4, the server proxy unit 14 of the server 10b conducts relay of only an access request for setting the service 11b as an access destination, and the server proxy unit 14 of the server 10c conducts relay of only an access request for setting the service 11c as an access destination. The server proxy unit 14 of each of the servers 10b and 10c recognizes that it is desirable to conduct relay of an access request for setting the service 11 a as a destination, in accordance with the notifications n4 and n5. It is not desirable that the server proxy units 14 of the servers 10b and 10c can relay the access request for the service 11a only if the notifications n4 and n5 are received. In the access request to the service 11a from the application 21a, destination information unique onto the network N1, such as a URL is designated as an access destination. Thus, the server proxy unit 14 of each of the servers 10 can relay the access request to the service 11 set as the access destination, even when an access request for the service 11 of another server 10 is received. Accordingly, the notifications n4 and n5 may or may not be performed in a case where the server proxy unit 14 of each of the servers 10 does not have to have a rule in which the access destination for conducting relay has been determined.

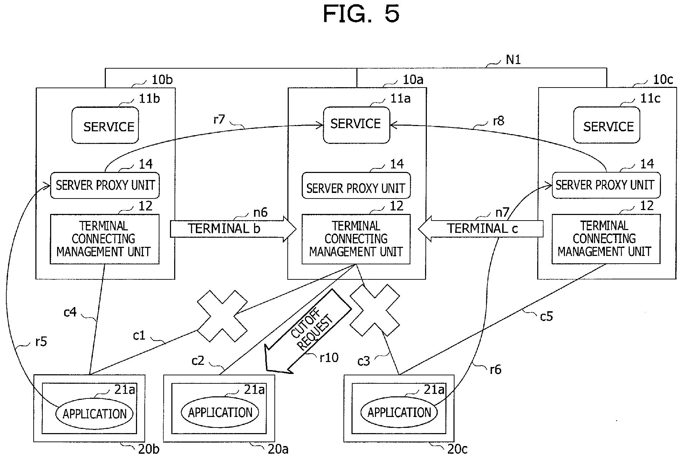

FIG. 5 is a diagram illustrating a process performed in a case where a terminal with which wireless communication has been cut off performs switching and coupling.

FIG. 5 illustrates a state where a wireless communication network of the server 10a becomes unstable due to congestion and the like, and as a result, the coupling c1 and the coupling c3 are cut off. In this case, the connecting management unit 23 of each of the terminals 20b and 20c performs switching and coupling to the terminal connecting management unit 12 of the server 10 which is notified as the connecting destination-at-cutoff in the notifications n1 and n3 (c4 and c5). At this time, the connecting management unit 23 of each of the terminals 20b and 20c notifies the terminal connecting management unit 12 of the server 10b or 10c that switching and coupling is performed.

The connecting-state synchronization unit 15 (not illustrated in FIG. 5) of each of the servers 10b and 10c which perform switching and coupling notifies the server 10a which is the original server 10 for the terminals 20b and 20c that the terminal 20b or 20c is switched and coupled (n6 and n7). The server 10a receives the notifications, and thus can recognize that the wireless communication network of the server 10a is in an unstable situation. In a case where such a notification occurs frequently, the terminal connecting management unit 12 of the server 10a transmits a cut-off request to the terminal 20a which is being coupled to the server 10a (r10). Transmission of the cut-off request is performed in order to reduce congestion of the wireless communication network and return to a state in which the wireless communication network is stable. Similarly to the terminal 20b, the terminal 20a is allowed to use the service 11a via the server 10b in accordance with the cut-off request. FIG. 5 illustrates a state where there is no terminal 20 coupled to the server 10a at this stage. However, in practice, another terminal 20 may be coupled to the server 10a.

The application 21a of each of the terminals 20b and 20c causes an access request for the service 11 a to the server proxy unit 14 of the server 10b or the server 10c which is set as the connecting destination-at-cutoff (r5 and r6). The application 21a does not fall under the influence of the connecting destination of the terminal 20 being changed. That is, in the state of FIG. 5, the application 21a of each of the terminals 20b and 20c does not have to change an access destination of the access request.

The server proxy unit 14 of each of the servers 10b and 10c recognizes to also conduct relay of the access request of which the access destination is set to be the service 11 a, in accordance with the notification n4 or n5 in FIG. 4. Accordingly, the server proxy unit 14 of each of the servers 10b and 10c relays the access request from the application 21a to the service 11a, to the access destination which is designated for the access request (r7 and r8). As a result, the application 21a of each of the terminals 20b and 20c can continuously use the service 11a.

With processing as described above, in the embodiment, it is possible to solve a situation in which wireless communication is unstable.

Processing procedures performed by each of the terminals 20 and the servers 10 will be described in detail below. First, a process performed by the terminals 20 will be described.

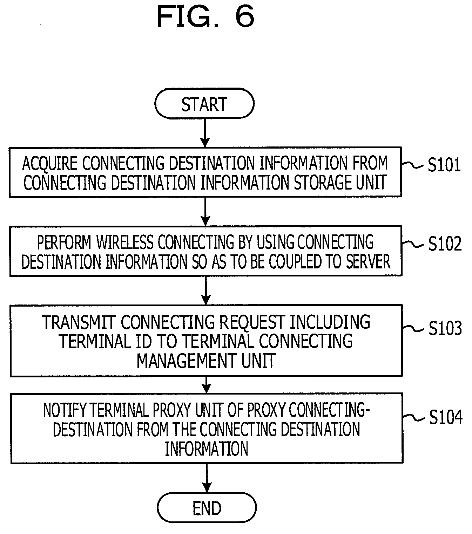

FIG. 6 is a flowchart illustrating an example of processing procedures performed by the connecting management unit when coupling to the server is performed. The process in FIG. 6 may be performed once when coupling to the original server 10 is performed.

For example, a user inputs an instruction of coupling to the server 10. The connecting management unit 23 acquires connecting destination information from the connecting destination information storage unit 213 in accordance with the input instruction by the user (S101).

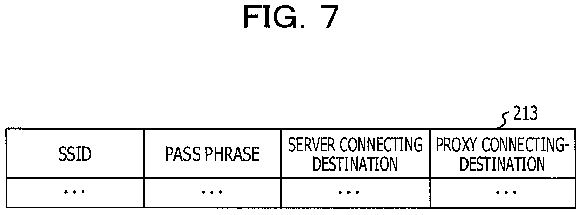

FIG. 7 illustrates a configuration example of the connecting destination information storage unit. As illustrated in FIG. 7, the connecting destination information storage unit 213 stores connecting destination information which includes an SSID, a pass phrase, a server connecting destination, a proxy connecting-destination, and the like. The SSID corresponds to an SSID of the access point AP of the original server 10. The pass phrase corresponds to a pass phrase used in authentication when coupling to a wireless communication network which corresponds to the SSID is performed. The server connecting destination corresponds to destination information of the terminal connecting management unit 12 of the original server 10. The proxy connecting-destination corresponds to destination information of the server proxy unit 14 of the original server 10. A value of each of the server connecting destination and the proxy connecting-destination corresponds to a URL, for example. The server connecting destination and the proxy connecting-destination stored in the connecting destination information storage unit 213 indicate the terminal connecting management unit 12 or the server proxy unit 14 of the same server 10. That is, each of the server connecting destination and the proxy connecting-destination are common to an IP address thereof in a case where each of the server connecting destination and the proxy connecting-destination corresponds to a URL.

The connecting destination information is preset and stored in the connecting destination information storage unit 213. That is, in each of the terminals 20, the server 10 as a first connecting destination is preset. For example, in a school, or in the terminal 20 of a student belonging to a class, the server 10 installed in the class may be set as the first connecting destination.

Then, the connecting management unit 23 is wirelessly coupled to an access point AP having an SSID of the acquired connecting destination information, and is coupled to the terminal connecting management unit 12 of the server 10 specified by using the server connecting destination of the connecting destination information (S102). The connecting management unit 23 transmits a connecting request including a terminal ID of the terminal 20, to the terminal connecting management unit 12 of the server 10 set as a connecting destination (S103). The terminal ID may be stored in the terminal 20 in advance or may be automatically generated based on information specific to each of the terminals 20. The connecting management unit 23 notifies the terminal proxy unit 22 of a proxy connecting-destination included in the connecting destination information (S104).

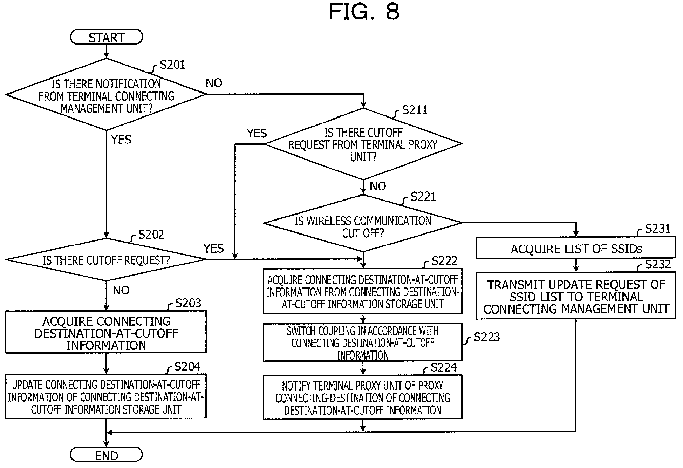

A process performed by the connecting management unit 23 after the process of FIG. 6 is performed. FIG. 8 is a flowchart illustrating an example of processing procedures performed by the connecting management unit after the connecting with the server is performed.

The connecting management unit 23 performs the process based on a request (S201) from the terminal connecting management unit 12 of the server 10 set as a connecting destination, a cut-off request (S211) from the terminal proxy unit 22, a change (S221) of a wireless coupling situation, or the like. The connecting management unit 23 periodically (NO in S221) scans a radio wave for wireless communication and acquires a list of SSID of radio waves enabled to be detected from the terminal 20 (S231).

In case of periodically acquiring a list of SSIDs, the connecting management unit 23 transmits an update request for an SSID list to the terminal connecting management unit 12 of the server 10 in which coupling is performed in FIG. 6, in order to cause an updated list to include the terminal ID of the terminal 20 and the list of SSIDs (S232).

The notification (S201) from the terminal connecting management unit 12 of the server 10 corresponds to the notification (NO in S202) of the connecting destination-at-cutoff information which indicates the server 10 set as the connecting destination-at-cutoff, or the cut-off request (YES in S202) of wireless communication. The notification (NO in S202) or the cut-off request (YES in S202) are transmitted from the terminal connecting management unit 12 in accordance with, for example, transmission of the list of SSIDs in Step S232.

In a case (NO in S202) where the notification of the connecting destination-at-cutoff information is received from the terminal connecting management unit 12, the connecting management unit 23 acquires connecting destination-at-cutoff information included in the received notification (S203).

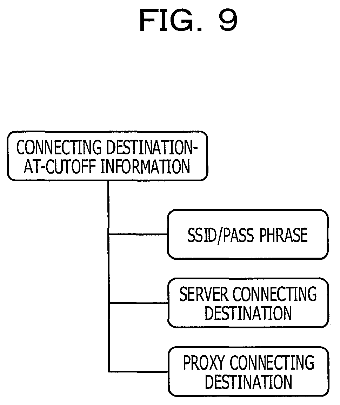

FIG. 9 illustrates a configuration example of the connecting destination-at-cutoff information. In FIG. 9, the connecting destination-at-cutoff information includes an SSID and a pass phrase, a server connecting destination, a proxy connecting-destination, and the like. That is, the connecting destination-at-cutoff information has a configuration similar to that of the connecting destination information illustrated in FIG. 7 except that the connecting destination information corresponds to information regarding the original server 10, but the connecting destination-at-cutoff information corresponds to information regarding the server 10 set as the connecting destination-at-cutoff. Specifically, the SSID of the connecting destination-at-cutoff information corresponds to an SSID of the access point AP of the server 10 set as the connecting destination-at-cutoff. The server connecting destination of the connecting destination-at-cutoff information corresponds to destination information of the terminal connecting management unit 12 of the server 10 set as the connecting destination-at-cutoff. The proxy connecting-destination of the connecting destination-at-cutoff information corresponds to destination information of the server proxy unit 14 of the server 10 set as the connecting destination-at-cutoff. For example, in a case where the original server 10 for a certain terminal 20 is the server 10a, the SSID of the connecting destination information, the server connecting destination, and the proxy connecting-destination have values which respectively correspond to the access point AP of the server 10a, the terminal connecting management unit 12, and the server proxy unit 14. In a case where the server 10 determined as the connecting destination-at-cutoff with regard to the terminal 20 is the server 10b, the SSID of the connecting destination information, the server connecting destination, and the proxy connecting-destination have values which respectively correspond to the access point AP of the server 10b, the terminal connecting management unit 12, and the server proxy unit 14. The connecting destination-at-cutoff for each of the terminals 20 is determined by the connecting-destination determination unit 13.

The connecting management unit 23 updates stored contents in the connecting destination-at-cutoff information storage unit 212 by using the acquired connecting destination-at-cutoff information (S204). That is, in a case where the connecting destination-at-cutoff information has been already stored in the connecting destination-at-cutoff information storage unit 212, the existing connecting destination-at-cutoff information is overwritten by new connecting destination-at-cutoff information.

In a case (Yes in S202) where the notification from the terminal connecting management unit 12 is a cut-off request for wireless communication, the connecting management unit 23 acquires connecting destination-at-cutoff information from the connecting destination-at-cutoff information storage unit 212 (S222). The process of Step S222 is basically performed after the process of Step S204 is performed at least one time. Thus, when the process of Step S222 is performed, the connecting destination-at-cutoff information storage unit 212 stores the connecting destination-at-cutoff information.

The connecting management unit 23 is wirelessly coupled to an access point AP relating to an SSID in the connecting destination-at-cutoff information, and performs switching and coupling so as to be coupled to the terminal connecting management unit 12 of the server 10 specified by the server connecting destination in the connecting destination-at-cutoff information (S223). For example, in a case where the server 10a corresponds to the original server 10 and the server 10b corresponds to the server 10 set as the connecting destination-at-cutoff, the coupling to the server 10a is cut off and coupling to an access point AP of the server 10b is performed, and coupling (switching and coupling) to the terminal connecting management unit 12 of the server 10b is performed. When switching and coupling is performed, a connecting request (switching and coupling request) from the connecting management unit 23 to the server 10 set as the connecting destination-at-cutoff includes the terminal ID of the terminal 20, the SSID of the original server 10, and information indicating that switching and coupling is performed.

The connecting management unit 23 notifies the terminal proxy unit 22 of a proxy connecting-destination of the connecting destination-at-cutoff information (S224). This notification is performed in order to cause an access request for the service 11, of which the terminal proxy unit 22 is notifies from the application 21 to be relayed to the server proxy unit 14 of the server 10 set as the connecting destination-at-cutoff.

The cut-off request (S211) from the terminal proxy unit 22 corresponds to a cut-off request for wireless communication which is received from the terminal proxy unit 22 in a case where the terminal proxy unit 22 which has performed a relay of the access request to the service 11 fails to access the service 11. If the connecting management unit 23 receives such a cut-off request (YES in S211), the processes of Steps S222 to S224 are performed. As a result, the connecting destination is switched from the original server 10 to the server 10 set as the connecting destination-at-cutoff.

Cutoff (S221) of wireless communication corresponds to detection of cutoff of wireless communication with the access point AP due to congestion of wireless communication, for example. If the connecting management unit 23 detects cutoff of wireless communication (YES in S221), the processes of Steps S222 to S224 are performed. As a result, the connecting destination is switched from the original server 10 to the server 10 set as the connecting destination-at-cutoff.

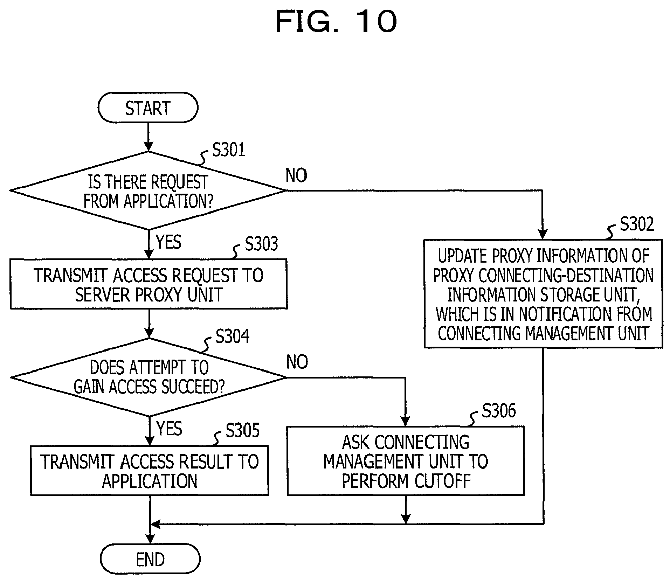

A process performed by the terminal proxy unit 22 of the terminal 20 will be described. FIG. 10 is a flowchart illustrating an example of processing procedures performed by the terminal proxy unit.

The terminal proxy unit 22 waits for a notification of the access request for the service 11 from the application 21 or the proxy connecting-destination from the connecting management unit 23 (S301).

If the notification of the proxy connecting-destination is received from the connecting management unit 23 (NO in S301), the terminal proxy unit 22 updates a proxy connecting-destination stored in a proxy connecting-destination information storage unit 211, by using the proxy connecting-destination (S302). That is, the proxy connecting-destination is stored as the destination information of the server proxy unit 14 which is desirable to be set as the connecting destination, in the proxy connecting-destination information storage unit 211. The process of Step S302 is performed in accordance with the process of Step S104 in FIG. 6 or Step S224 in FIG. 8. That is, the process of Step S302 is performed when coupling to the original server 10 is performed or when the server 10 as the connecting destination is switched.

If the terminal proxy unit 22 receives the access request to the service 11 from the application 21 (YES in S301), the terminal proxy unit 22 transmits the received access request to the server proxy unit 14 relating to the proxy connecting-destination stored in the proxy connecting-destination information storage unit 211 (S303). The transmitted access request includes details of an access (destination information of the service 11 as the access destination, details of a request for the service 11, and the like). The destination information of the service 11 as the access destination corresponds to a URL, for example.

If gaining access (using of the service 11) to the service 11 in response to the access request succeeds (YES in S304), the terminal proxy unit 22 transmits an access result to the application 21 as a response (S305). The access result corresponds to a response transmitted from the service 11 as the access destination. Success in gaining access means that a response from the service 11 as the access destination is normally received.

If gaining access in response to the access request fails (NO in S304), the terminal proxy unit 22 asks the connecting management unit 23 to perform cutoff of current coupling with the server 10 (S306). For example, in a case where the terminal proxy unit 22 does not enable access to the server proxy unit 14 relating to the proxy connecting-destination, or in a case where gaining access to the server proxy unit 14 from the terminal proxy unit 22 succeeds, but gaining access to the service 11 set as the access destination from the server proxy unit 14 fails, the process of Step S306 is performed. The processes (S222 to S224) in case of being YES in Step S211 of FIG. 8 are performed in response to the request in Step S306.

The application 21 sets the service 11 which is desired to be used by the application 21, as an access destination regardless of the connecting destination of the terminal 20. For example, even after coupling of the terminal 20 and the original server 10 (here, assumed to be the server 10a) and the terminal 20 is coupled to the server 10 (here, assumed to be the server 10b) set as the connecting destination-at-cutoff, the application 21 transmits an access request in which the service 11 in the server 10a is set as the access destination, to the terminal proxy unit 22. In this case, because the proxy connecting-destination stored in the proxy connecting-destination information storage unit 211 corresponds to the server proxy unit 14 of the server 10b, the terminal proxy unit 22 transmits the access request to the server proxy unit 14 of the server 10b. The server proxy unit 14 of the server 10b accesses the service 11 in the server 10a based on the access destination which is included in the access request. That is, even when wireless communication is cut off, the service 11 in the server 10a is an access target, as long as the service 11 in the server 10a is normally operated. Thus, even in a case where the wireless communication network of the server 10a is unstable, the terminal 20 can stably use the service 11 of the server 10a.

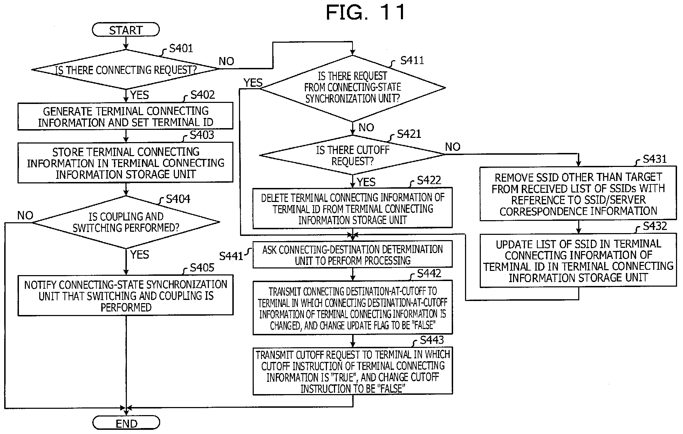

A process performed by the server 10 will be described. FIG. 11 is a flowchart illustrating an example of processing procedures performed by the terminal connecting management unit. The terminal connecting management unit 12 is operated based on a request from the connecting management unit 23 of the terminal 20 or a request from the connecting-state synchronization unit 15. The request from the connecting management unit 23 corresponds to the connecting request transmitted in Step S103 of FIG. 6 or the switching and coupling request transmitted in Step S223 of FIG. 8, the cut-off request, and the update request for the SSID list transmitted in Step S232 of FIG. 8. The cut-off request corresponds to a cut-off request transmitted from the connecting management unit 23 of the terminal 20 in response to a cutoff instruction of the terminal 20 by a user who has ended use of the service 11. That is, the cut-off request herein corresponds to a cut-off request in a normal system, not a cut-off request in accordance with abnormality.

If the terminal connecting management unit 12 receives the connecting request transmitted from the connecting management unit 23 of the terminal 20 in Step S103 of FIG. 6 or the switching and connecting request transmitted from the connecting management unit 23 of the terminal 20 in Step S223 of FIG. 8 (YES in S401), the terminal connecting management unit 12 generates new terminal connecting information and sets a terminal ID and the like which are included in the connecting request, in the generated terminal connecting information (S402).

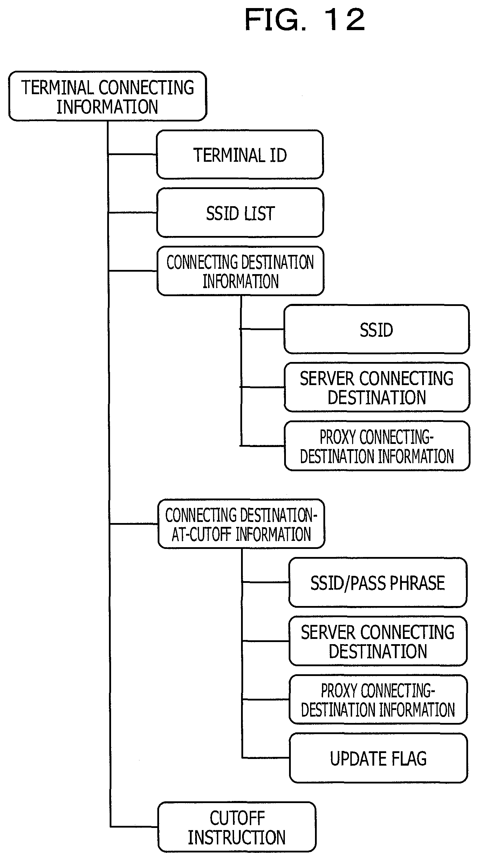

FIG. 12 illustrates a configuration example of the terminal connecting information. The terminal connecting information corresponds to information generated for each of the terminals 20 which are coupled to the server 10. The terminal connecting information includes items of a terminal ID, an SSID list, connecting destination information, connecting destination-at-cutoff information, a cutoff instruction, and the like. The terminal ID is a terminal ID of the terminal 20 corresponding to the terminal connecting information. The SSID list corresponds to a list of SSIDs detected by the terminal 20 relating to the terminal ID.

The connecting destination information corresponds to information regarding the current connecting destination of the terminal 20 relating to the terminal ID. The connecting destination information includes an SSID, a server connecting destination, a proxy connecting-destination, and the like. The SSID corresponds to an SSID of an access point AP of the current connecting destination of the terminal 20 relating to the terminal ID. The server connecting destination corresponds to destination information of the terminal connecting management unit 12 of the server 10 set as the current connecting destination of the terminal 20 relating to the terminal ID. The proxy connecting-destination corresponds to destination information of the server proxy unit 14 of the server 10 set as the current connecting destination of the terminal 20 relating to the terminal ID.

The connecting destination-at-cutoff information corresponds to information regarding the server 10 set as the connecting destination-at-cutoff. The connecting destination-at-cutoff information has the same basic configuration as that in FIG. 9 except that the connecting destination-at-cutoff information belonging to the terminal connecting information includes an update flag. The update flag corresponds to a flag for determining whether or not the connecting destination-at-cutoff information is updated in a process (which will be described later) performed by the connecting-destination determination unit 13. In a case where the connecting-destination determination unit 13 updates the connecting destination-at-cutoff information, the value of the update flag is changed to "true".

The cutoff instruction corresponds to information indicating whether or not the terminal 20 relating to the terminal connecting information is instructed of cutoff of coupling with the server 10. The cutoff instruction has a value of "true" or "false". "True" indicates that an instruction of cutoff is transmitted. "False" indicates that an instruction of cutoff is not transmitted. In a case where the number of terminals 20 which perform switching and coupling to another server 10 due to abnormality of wireless communication among the terminals 20 coupled with the original server 10 exceeds the threshold value α, some or all of the terminals 20 coupled to the original server 10 have a value of the cutoff instruction of the terminal connecting information, which is updated to be "true".

In Step S402, a value is set in the terminal ID of the newly-generated terminal connecting information. An SSID of the server 10 is set as the SSID of the connecting destination information of the terminal connecting information, destination information of the terminal connecting management unit 12 of the server 10 is set as the server connecting destination, and destination information of the server proxy unit 14 of the server 10 is set as the proxy connecting-destination. Values of other items in the terminal connecting information are set in a process (which will be described later).

The terminal connecting management unit 12 stores the generated terminal connecting information in the terminal connecting information storage unit 121 (S403). The terminal connecting information storage unit 121 stores the terminal connecting information for each of the terminals 20 coupled to the server 10.

The terminal connecting management unit 12 determines whether or not the connecting request which is set as a processing target is the switching and connecting request (S404). That is, it is determined whether or not the connecting request is the switching and connecting request transmitted from the terminal 20 in Step S223 of FIG. 8. The determination may performed based on whether or not the connecting request includes information indicating that the request is the switching and connecting request. In case (NO in S404) of not being the switching and connecting request, the process in FIG. 11 is ended.

In case (YES in S404) of being the switching and connecting request, the terminal connecting management unit 12 notifies the connecting-state synchronization unit 15 of the server 10 that switching and coupling is performed (S405). This notification includes the terminal ID and the SSID of the original server 10 which are included in the switching and connecting request. In this case, as will be described later, the connecting-state synchronization unit 15 notifies the other server 10 that a certain terminal 20 performs switching and coupling on the server 10. For example, if the connecting destination-at-cutoff corresponds to the server 10b, the server 10a and the server 10c are notified that the certain terminal 20 performs switching and coupling on the server 10b. This notification includes the terminal ID of the certain terminal 20. Thus, each of the server 10a and the server 10c can determine whether or not the certain terminal 20 is a terminal 20 coupled to the server 10a or the server 10c, based on the terminal ID included in this notification and the terminal connecting information stored in the terminal connecting information storage unit 121 of the server 10. That is, the original server 10 of the certain terminal 20 among the server 10a and the server 10c can recognize that the terminal 20 coupled to the own server performs switching and coupling to another server 10 due to abnormality of wireless communication with the own server.

If the terminal connecting management unit 12 receives the cut-off request in the normal system, which is transmitted from the connecting management unit 23 of the terminal 20 (YES in S421), the terminal connecting management unit 12 deletes the terminal connecting information (FIG. 12) which is included in the cut-off request and relates to the terminal ID, from the connecting information storage unit 121 (S422).

The terminal connecting management unit 12 asks the connecting-destination determination unit 13 to perform processing (S441). The connecting-destination determination unit 13 determines a connecting destination-at-cutoff of each of the terminals 20, based on a list of the terminal connecting information stored in the terminal connecting information storage unit 121. The connecting-destination determination unit 13 determines whether or not the cutoff instruction is desired for each of the terminals 20 coupled to the own server 10, based on the number of terminals 20 which are switched and coupled from the own server 10 to another server 10. Thus, the connecting destination-at-cutoff information or the cutoff instruction in any terminal connecting information in the list of the terminal connecting information stored in the terminal connecting information storage unit 121 is updated by the connecting-destination determination unit 13. In a case where the connecting destination-at-cutoff information is updated, the update flag of the updated connecting destination-at-cutoff information is changed to be "true".

If the process performed by the connecting-destination determination unit 13 is ended, the terminal connecting management unit 12 specifies terminal connecting information in which the update flag of the connecting destination-at-cutoff information is "true", among pieces of terminal connecting information stored in the terminal connecting information storage unit 121, and the terminal connecting management unit 12 transmits connecting destination-at-cutoff information of the specified terminal connecting information to the terminal 20 relating to the terminal ID in the specified terminal connecting information (S442). The terminal connecting management unit 12 changes the update flag of the transmitted connecting destination-at-cutoff information to be "false". The connecting destination-at-cutoff information transmitted at this time is received in Step S201 of FIG. 8. That is, in this case, the processes of Steps S203 and S204 are performed in the terminal 20 set as a transmission destination of the connecting destination-at-cutoff information.

The terminal connecting management unit 12 specifies terminal connecting information in which a cutoff flag is "true", among pieces of the terminal connecting information stored in the terminal connecting information storage unit 121, and the terminal connecting management unit 12 transmits a cut-off request to the terminal 20 relating to the terminal ID in the specified terminal connecting information (S443). The terminal connecting management unit 12 changes the cutoff flag of a terminal connecting information corresponding to the terminal 20 which has transmitted the cut-off request, to be "false". The cut-off request transmitted at this time is received in Step S201 of FIG. 8. That is, in this case, the processes of Steps S222 to S224 are performed in the terminal 20 set as a transmission destination of the connecting request. As a result, the terminal 20 performs switching and coupling to the server 10 indicated by the connecting destination-at-cutoff information which is set for the terminal 20. In Step S443, the terminal connecting management unit 12 does not transmit the cut-off request to the terminal 20, but may forcibly cut off wireless communication of the terminal 20. In this case, the terminal 20 performs the process in case of being YES in Step S221 of FIG. 8, and thus it is possible to obtain an effect similar to a case where the cut-off request is transmitted.

If the terminal connecting management unit 12 receives the update request of the SSID list, which is transmitted in Step S232 of FIG. 8 (NO in S421), the terminal connecting management unit 12 removes an SSID which does not correspond to any server 10, from the received list of SSIDs with reference to the SSID/server correspondence storage unit 122 (S431).

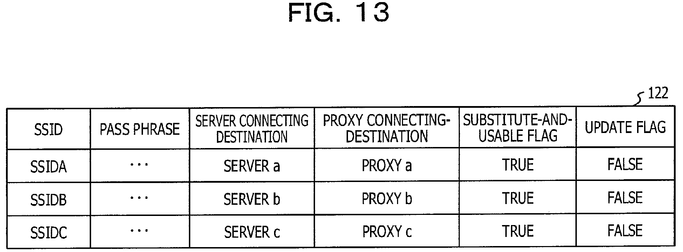

FIG. 13 illustrates a configuration example of the SSID/server correspondence storage unit. As illustrated in FIG. 13, the SSID/server correspondence storage unit 122 stores an SSID, a pass phrase, a server connecting destination, a proxy connecting-destination, a substitute-and-usable flag, and an update flag which correspond to the own server 10, for each of the servers 10.

The pass phrase corresponds to information used when coupling to an access point having the SSID is performed, when the terminal 20 performs switching and coupling. Herein, an example in which wireless coupling is performed by using the SSID and the pass phrase is described. However, the SSID/server correspondence storage unit may have a configuration in which information desirable for the wireless coupling, such as an SSID, a BSSID, and a MAC address. The server connecting destination corresponds to destination information of the terminal connecting management unit 12 of the server 10. "Server a", "server b", and "server c" in FIG. 13 respectively indicate pieces of the destination information of the terminal connecting management units 12 of the server 10a, the server 10b, and the server 10c in practice.

The proxy connecting-destination corresponds to destination information of the server proxy unit 14 of the server 10. "Proxy a", "proxy b", and "proxy c" in FIG. 13 respectively indicate pieces of the destination information (URL and the like) of the server proxy units 14 of the server 10a, the server 10b, and the server 10c in practice.

The substitute-and-usable flag corresponds to information indicating whether or not the server 10 can be used as the connecting destination-at-cutoff for another server 10. An initial value of the substitute-and-usable flag is "true" indicating being usable.

The update flag corresponds to information indicating whether or not a value of the substitute-and-usable flag is updated. "True" indicates that the value of the substitute-and-usable flag is updated. "False" indicates that the value of the substitute-and-usable flag is not updated. That is, the substitute-and-usable flag is changed in accordance with a situation of the wireless coupling to each of the servers 10.

It is recognized that an SSID which is not stored in the SSID/server correspondence storage unit 122 is not the SSID of the server 10. Thus, in Step S431, an SSID which does not correspond to the server 10 is removed from the received list of SSIDs. At this time, the SSID corresponding to the own server 10 is also removed from the received list of SSIDs.

The terminal connecting management unit 12 updates the SSID list in the terminal connecting information relating to the terminal ID which is included in the received update request, in the terminal connecting information storage unit 121, by using a list of SSID after the process of Step S431 is performed (S432). The terminal connecting management unit 12 performs the processes of Steps S441 to S443.

The terminal connecting management unit 12 also performs the processes of Steps S441 to S443 in a case (YES in S411) where a request from the connecting-state synchronization unit 15 is received. The request (S411) from the connecting-state synchronization unit 15 will be described later.

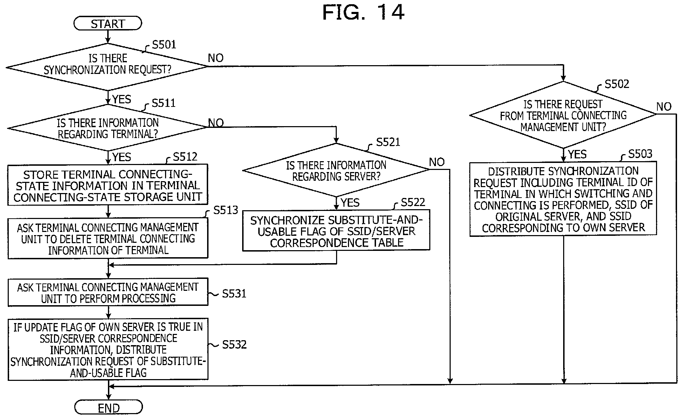

A process performed by the connecting-state synchronization unit 15 will be described. FIG. 14 is a flowchart illustrating an example of processing procedures performed by the connecting-state synchronization unit. The connecting-state synchronization unit 15 is operated in Step S405 of FIG. 11, in accordance with a notification of switching and coupling from the terminal connecting management unit 12 or a synchronization request from the connecting-state synchronization unit 15 of another server 10.

In Step S405 of FIG. 11, if a notification that the terminal 20 performs switching and coupling to the own server 10 is received from the terminal connecting management unit 12 (NO in S501 and YES in S502), the terminal connecting management unit 12 distributes a synchronization request to the connecting-state synchronization unit 15 of each of other servers 10 (S503). The synchronization request includes a terminal ID of the terminal 20 in which switching and coupling is performed, the SSID of the original server 10, and an SSID corresponding to the own server 10 (server 10 which is subjected to switching and coupling). That is, each of the servers 10 is notified that the terminal 20 is subjected to switching and coupling to the own server 10 from the original server 10. The synchronization request may be transmitted only to the original server 10. The synchronization request corresponds to the notifications n6 and n7 in FIG. 5.

If the synchronization request is received (YES in S501 and YES in S511), the connecting-state synchronization unit 15 of each of other servers 10 generates terminal connecting-state information corresponding to the terminal ID which is included in the synchronization request, and causes the generated terminal connecting-state information to be stored in the terminal connecting-state storage unit 124 (S512).

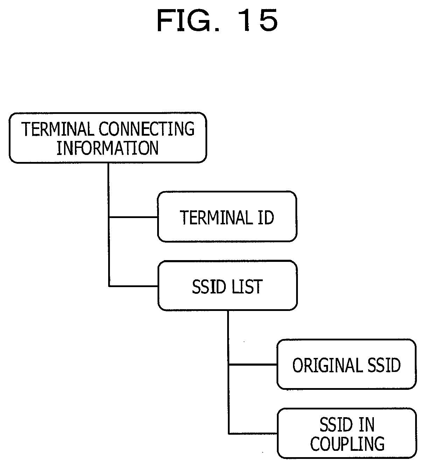

FIG. 15 illustrates a configuration example of the terminal connecting-state information. As illustrated in FIG. 15, the terminal connecting-state information includes items of a terminal ID, SSID information, and the like. The terminal ID corresponds to a terminal ID of the terminal 20 corresponding to the terminal connecting-state information. The SSID information includes an original SSID and an SSID-in-connecting. The original SSID corresponds to an SSID of the original server 10 of the terminal 20. The SSID-in-connecting is an SSID corresponding to the server 10 to which the terminal 20 is currently coupled. That is, the SSID-in-connecting is an SSID of the server 10 subjected to switching and coupling by the terminal 20. In a case where the terminal connecting-state information corresponding to the terminal ID which is included in the synchronization request is already stored in the terminal connecting-state storage unit, the SSID information in the terminal connecting information is updated by using the SSID which is included in the synchronization request.

In this manner, the terminal connecting-state storage unit 124 stores terminal connecting-state information for each of the terminals 20 which are subjected to switching and coupling.

The connecting-state synchronization unit 15 asks the terminal connecting management unit 12 to delete the terminal connecting information corresponding to the terminal ID which is included in the synchronization request (S513). The terminal connecting management unit 12 deletes the terminal connecting information in response to the request, if the terminal connecting information including the terminal ID is stored in the terminal connecting information storage unit 121. In a case where the server 10 which has received synchronization information is the original server 10 for the terminal 20 relating to the terminal ID which is included in the synchronization information, the terminal connecting information corresponding to the terminal 20 may be stored in the terminal connecting information storage unit 121 despite coupling of the terminal 20 and the server 10 is cut off. Thus, in Step S513, terminal connecting information corresponding to the terminal 20 which performs switching and coupling to another server 10, or the terminal 20 which detects cutoff of wireless communication with the server 10 and performs switching and coupling to another server 10 is removed from the terminal connecting information storage unit 121 in response to the cut-off request from the server 10.

The connecting-state synchronization unit 15 asks the terminal connecting management unit 12 of the own server 10 to perform processing (S531). The request corresponds to the request from the connecting-state synchronization unit 15 in Step S411 of FIG. 11. Thus, in Step S531, the processes of S441 to S443 in FIG. 11 are performed. As a result, in the SSID/server correspondence storage unit 122 (FIG. 13) of the own server 10, a substitution flag of a record corresponding to the SSID of the own server 10 is updated to be "false", and thereby the update flag of the record may be updated to be "true".

If the process performed by the terminal connecting management unit 12 is ended, the connecting-state synchronization unit 15 distributes a synchronization request of a value of the substitute-and-usable flag of the record to each of other servers 10 if the update flag of a record for the own server 10 is "true" in the SSID/server correspondence storage unit 122 (S532). The synchronization request includes the SSID corresponding to the own server 10 and the value of the substitute-and-usable flag.

If the synchronization request is received (YES in S501 and NO in S511), the connecting-state synchronization unit 15 of each of other servers 10 updates contents of the SSID/server correspondence storage unit 122 of the own server 10, in response to the received synchronization request (S522). That is, in the SSID/server correspondence storage unit 122, the value of the substitute-and-usable flag of a record corresponding to the SSID which is included in the synchronization request is updated to be a value included in the synchronization request. Then, the processes of Steps S531 and S532 are performed.

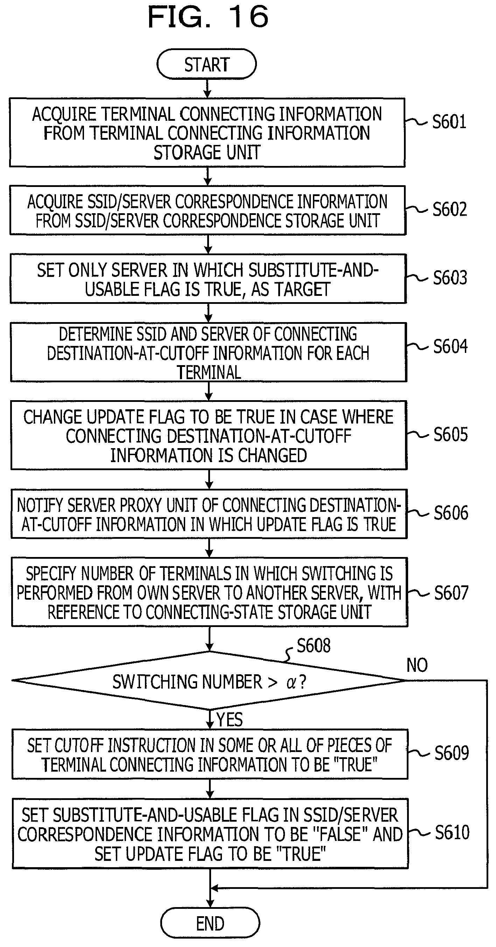

A process performed by the connecting-destination determination unit 13 will be described. FIG. 16 is a flowchart illustrating an example of processing procedures performed by the connecting-destination determination unit. The connecting-destination determination unit 13 is operated based on the request from the terminal connecting management unit 12 in Step S441 of FIG. 11. That is, as in a case where a synchronization request is received from another server 10, a cut-off request is received from the terminal 20, or the SSID detected by the terminal 20 which is coupled to the own server 10 is changed, in a case where any change occurs in an environment of the terminal 20, the configuration of the terminal 20 coupled to the server 10, or the like, the process in FIG. 16 is performed.

In Step S601, the connecting-destination determination unit 13 acquires all pieces of terminal connecting information from the terminal connecting information storage unit 121. The connecting-destination determination unit 13 acquires all records stored in the SSID/server correspondence storage unit 122 (S602). The connecting-destination determination unit 13 extracts only a record in which the value of the substitute-and-usable flag is "true", from the acquired records (S603). That is, candidates for the connecting destination-at-cutoff are narrowed down so as to be the server 10 in which the value of the substitute-and-usable flag is "true".

The connecting-destination determination unit 13 determines an SSID, a server connecting destination, and a proxy connecting-destination which relate to the connecting destination-at-cutoff, based on the value of the SSID list in the terminal connecting information, for each of pieces of the terminal connecting information (that is, each of the terminals 20) (S604). Any SSID may be selected as the SSID of the connecting destination-at-cutoff by a certain terminal 20, as long as the selected SSID is an SSID included in the SSID list of the terminal connecting information relating to the terminal 20. The destination information of the terminal connecting management unit 12 of the server 10 corresponding to the selected SSID, and the destination information of the server proxy unit 14 of the server 10 may be used as a server connecting destination in the connecting destination-at-cutoff or a proxy connecting-destination in the connecting destination-at-cutoff.

Additionally, the SSID, the server connecting destination, and the proxy connecting-destination may be determined based on a predetermined rule. For example, the SSID of the connecting destination-at-cutoff may be determined based on details of the SSID which is included in the SSID list of the terminal connecting information. As an example, an SSID which is detected by the most terminals 20 may be preferentially selected. This is an example in which it is determined that substitution of the wireless coupling to the server 10 which is near to many terminals 20 causes efficiency of the network to be improved. In this case, the destination information of the terminal connecting management unit 12 of the server 10 corresponding to the SSID and the destination information of the server proxy unit 14 of the server 10 are determined as the server connecting destination in the connecting destination-at-cutoff or the proxy connecting-destination in the connecting destination-at-cutoff. Regarding the terminal 20 which does not enable detection of the SSID, an SSID which is detected by the most terminal 20 among SSID detected by the terminal 20 is selected. In this case, the destination information of the terminal connecting management unit 12 of the server 10 corresponding to the selected SSID and the destination information of the server proxy unit 14 of the server 10 are determined as the server connecting destination in the connecting destination-at-cutoff or the proxy connecting-destination in the connecting destination-at-cutoff.

As another example, the connecting destination-at-cutoff may be determined based on a use state (load state) of each of the servers 10 or the degree of congestion of wireless communication. In a case where the connecting destination-at-cutoff is determined based on the use state of each of the servers 10, information (for example, terminal connecting information stored in each of the servers 10) which indicates the use state of the own server 10 may be exchanged between the servers 10. In this case, the use state (load state) of the server 10 may be determined based on the number of pieces of terminal connecting information stored in each of the servers 10. In addition, information regarding load of the CPU 104 of the server 10 and the like may be exchanged between the servers 10. An SSID detected by the terminal 20 can be specified based on the SSID list in the terminal connecting information corresponding to each of the terminals 20.

The SSID, the server connecting destination, and the proxy connecting-destination which are determined for each of pieces of the terminal connecting information in Step S604 are set in the connecting destination-at-cutoff information of each of pieces of the terminal connecting information. In a case where set values are the same as those of an SSID, a server connecting destination, and a proxy connecting-destination which have been already set in the connecting destination-at-cutoff information, the connecting destination-at-cutoff information may not be updated.

The connecting-destination determination unit 13 changes the update flag of updated connecting destination-at-cutoff information to be "true" (S605). The connecting-destination determination unit 13 notifies the server proxy unit 14 of the connecting destination-at-cutoff information in which the update flag is "true" (S606).

The connecting-destination determination unit 13 specifies the number (referred to as "switching number" below) of terminals 20 which switches coupling from the own server 10 to another server 10, based on the terminal connecting-state information (FIG. 15) stored in the terminal connecting-state storage unit 124 (S607). The switching number corresponds to the number of pieces of the terminal connecting-state information in which a value of the original SSID in the SSID information is the same as that of an SSID corresponding to the own server 10, among pieces of the terminal connecting-state information stored in the terminal connecting-state storage unit 124.

The connecting-destination determination unit 13 determines whether or not the switching number exceeds the threshold value α (S608). In a case (NO in S608) where the switching number is equal to or smaller than the threshold value α, the process in FIG. 16 is ended.

In a case (YES in S608) where the switching number exceeds the threshold value α, the connecting-destination determination unit 13 sets a value of the cutoff instruction in some or all of pieces of terminal connecting information (FIG. 12) stored in the terminal connecting information storage unit 121, to be "true" (S609). That is, a cut-off request for some or all of the terminals 20 which are being coupled to the own server 10 is generated. In a case where the switching number exceeds the threshold value α, the wireless coupling to the own server 10 is cut off in many terminals 20. Accordingly, it is presumed that the wireless communication network relating the access point AP of the own server 10 is in an unstable state (for example, state in which congestion and the like occurs). Thus, the number of terminals 20 which use the wireless communication network is reduced and the process of Step S609 is performed in order to stabilize the wireless communication network. The number of pieces of the terminal connecting information in which the cutoff instruction is "true" (that is, the number of terminals 20 which are set as a target of the cut-off request) may be determined so as to cause the number of pieces of terminal connecting information in which the cutoff instruction is not "true" to be equal to or smaller than the threshold value α, For example, in pieces of the terminal connecting information of which the number is (switching number-threshold value α), the cutoff instruction may be "true".

The connecting-destination determination unit 13 sets "false" in the substitute-and-usable flag of a record corresponding to the own server 10 in the SSID/server correspondence storage unit 122, and sets "true" in the update flag of the record (S610). Because the wireless communication network of the own server 10 is unstable, such setting is performed in order to not select the own server 10 as a connecting destination-at-cutoff for another server 10. That is, as made clear by the process of Step S603, the server 10 in which the substitute-and-usable flag is "false" may not be as the connecting destination-at-cutoff.

A result of the process in FIG. 16 is applied to the terminal 20 in Steps S442 and S443 of FIG. 11.

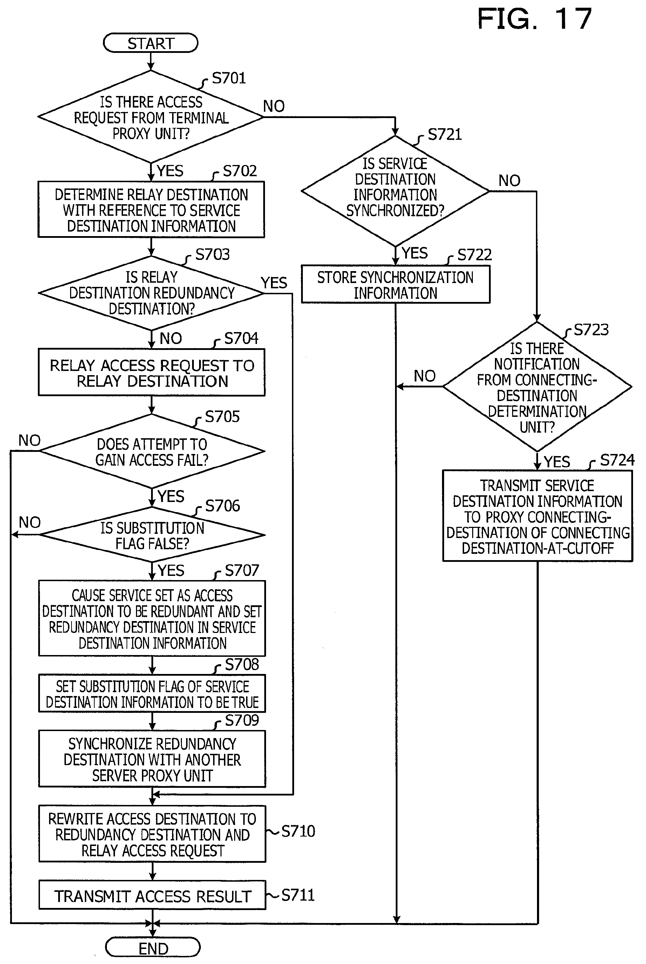

A process performed by the server proxy unit 14 will be described. FIG. 17 is a flowchart illustrating an example of processing procedures performed by the server proxy unit. The server proxy unit 14 is operated based on the access request to the service 11 from the terminal proxy unit 22 in Step S303 of FIG. 10, the notification from the connecting-destination determination unit 13 in Step S606 of FIG. 16, and the like.

If the server proxy unit 14 receives the access request to the service 11 from the terminal proxy unit 22 (YES in S701), the server proxy unit 14 determines a relay destination of the access request with reference to service destination information stored in the service-destination information storage unit 123 (S702).

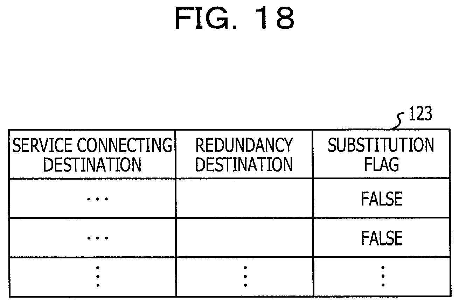

FIG. 18 illustrates a configuration example of the service-destination information storage unit. As illustrated in FIG. 18, the service-destination information storage unit 123 stores a service connecting destination, a redundancy destination, a substitution flag, and the like for each of the services 11 for which the server proxy unit 14 of the own server 10 conducts relay of the access request.

The service connecting destination corresponds to destination information (for example, a URL and the like) of the service 11 for which the server proxy unit 14 of the own server 10 conducts relay of the access request. The service connecting destination has a unique value on the network. The redundancy destination corresponds to an effective item in a case where the service 11 relating to the service connecting destination is caused to be redundant in another server 10. The redundancy destination has a value which indicates destination information (for example, a URL and the like) of the redundancy destination. The service 11 is caused to be redundant in a case where use of the service 11 is not allowed. For example, in a case where the service 11 has high load, or in a case where abnormality or a trouble occurs in the service 11, use of the service 11 is not allowed and the service 11 is caused to be redundant. Thus, regarding the service 11 in which being redundant is not performed, the value of the redundancy destination is null. The substitution flag corresponds to information indicating whether or not the service 11 relating to the service connecting destination is the service 11 of which the server proxy unit 14 of the own server 10 does not conduct relay thereof. Basically, the server proxy unit 14 of each of the servers 10 relays only an access request for the service 11 of the own server 10. Accordingly, in an initial state, only a record relating to the service 11 which is operated in the own server 10 is stored in the service-destination information storage unit 123. The server proxy unit 14 of the server 10 subjected to switching and coupling from a certain terminal 20 conducts the access request for the service 11 of the original server 10 relating to the switching and coupling. In this case, a record in which the substitution flag is "true" and destination information of the service 11 operated in a server other than the own server 10 is set as a service connecting destination is added to the service-destination information storage unit 123. Thus, an initial value of the substitution flag is "false". Such addition processing of a record will be described later.

In Step S702, the server proxy unit 14 searches for a record (referred to as "a target record" below) in which the value of the service connecting destination is the same as that of the access destination designated in the access request, from the service-destination information storage unit 123. If the redundancy destination of the target record is null, the access destination designated in the access request (that is, a service connecting destination of the target record) is determined as a relay destination. If the redundancy destination is stored in the target record, the redundancy destination is determined as the relay destination. In a case where the target record is not searched for, the server proxy unit 14 may discard the access request and perform the processes subsequent to the process of Step S704. In a case where the processes subsequent to the process of Step S704 are performed, the substitution flag may be handled as being "true" in Step S706.

The server proxy unit 14 divides the process based on whether or not the redundancy destination of the target record is determined as the relay destination (S703). In a case (NO in S703) where the redundancy destination is not the relay destination, the server proxy unit 14 relays the access request to the relay destination (S704). The specific details of relay processing for the access request are changed depending on the substitution flag of the target record. In a case where the substitution flag is "false", the service 11 set as the access destination in the access request corresponds to the service 11 operated in the own server 10. Thus, the relay processing in this case corresponds to a notification of the access request for the service 11. In a case where the substitution flag is "true", the service 11 set as the access destination in the access request corresponds to the service 11 operated in another server 10. Thus, the relay processing in this case corresponds to sending of the access request onto the network N1. The service 11 relating to the access destination is notified of the access request sent onto the network N1.

In a case (NO in S705) where gaining access to the service 11 (a use of the service 11) set as the relay destination succeeds, the server proxy unit 14 transmits a response from the service 11 (as an access result) to the terminal proxy unit 22 set as a transmission destination of the access request (S711).

In a case (YES in S705) where gaining access to the service 11 (a use of the service 11) set as the relay destination fails, if the substitution flag of the target record is "true" (NO in S706), the server proxy unit 14 transmits information indicating failure of the access as an access result to the terminal proxy unit 22 set as the transmission destination of the access request (S711).

If the substitution flag of the target record is "false" (YES in S706), the server proxy unit 14 causes the service 11 set as the access destination to be redundant in another server 10 (S707). Being redundant causes destination information (URL and the like) of the service 11 set as a redundancy destination to be specified. Thus, the server proxy unit 14 sets destination information of the service 11 set as the redundancy destination, in the redundancy destination of the target record. Being redundant may be performed by using a well-known technology. The server proxy unit 14 sets "true" in the substitution flag of the target record (S708). The server proxy unit 14 transmits synchronization information including the service connecting destination and the redundancy destination of the target record to the server proxy unit 14 of another server 10, and thereby synchronization of the contents of the target record with the service-destination information storage unit 123 of another server 10 (S709) is performed.

The server proxy unit 14 rewrites the access destination of the access request in the redundancy destination of the target record and relays the access request (S710). That is, the access request is transmitted to the service 11 set as the redundancy destination (S720). The server proxy unit 14 transmits an access result to the service 11 set as the redundancy destination (S711).

In a case (YES in S703) where the redundancy destination matches with the relay destination, the processes of Steps S710 and S711 are performed.

In Step S606 of FIG. 16, in a case (YES in S723) where a notification of the connecting destination-at-cutoff information is received from the connecting-destination determination unit 13, the server proxy unit 14 transmits synchronization information to the server proxy unit 14 of the server 10 which is set as the connecting destination-at-cutoff and relates to the proxy connecting-destination in the received notification of the connecting destination-at-cutoff information (S724). The transmitted synchronization information includes a service connecting destination and a redundancy destination of each of all records stored in the service-destination information storage unit 123 of the own server 10.

The server proxy unit 14 of another server 10 receives the synchronization information which has been transmitted in Step S709 or the Step S709 which has been transmitted in Step S724 (YES in S721), and causes a record corresponding to the received synchronization information to be stored in the service-destination information storage unit 123 of the own server 10 (S722). That is, in a case where a record including a service connecting destination which matches with a service connecting destination of the received synchronization information is not stored in the service-destination information storage unit 123, a new record is added and the service connecting destination and the redundancy destination of the synchronization information is stored in the added record. At this time, "true" is set in the substitution flag of this record. In a case where a record including a service connecting destination of the received synchronization information which matches with the service connecting destination is stored in the service-destination information storage unit 123, the redundancy destination of the record is overwritten to be a redundancy destination of the synchronization information.

A process performed by the server proxy unit 14 of the server 10 which recovers the service 11, in a case where the service 11 in which being redundant is performed is recovered and being redundant is released will be described.

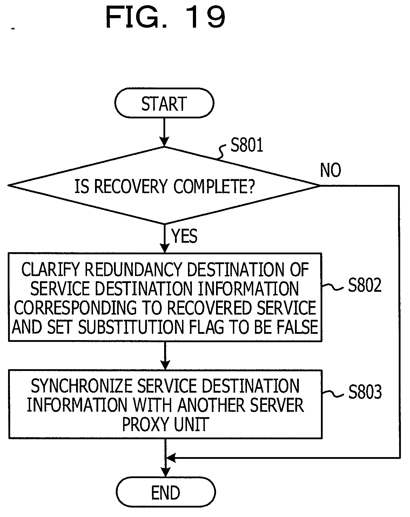

FIG. 19 is a flowchart illustrating an example of processing procedures performed by the server proxy unit in accordance with the recovery of the service.

If the service 11 which is in a state where a use of the service 11 is not allowed is recovered and being redundant for the service 11 is released (YES in S801), the server proxy unit 14 of the server 10 which recovers the service 11 updates a record which is stored in the service-destination information storage unit 123 and corresponds to the service 11 (S802). Specifically, a redundancy destination of the record is set to be null and "false" is set in the substitution flag of the record. The server proxy unit 14 transmits synchronization information to the server proxy unit 14 of another server 10, and thereby synchronization of the contents of the target record with the service-destination information storage unit 123 of another server 10 (S803) is performed. The transmitted synchronization information includes the service connecting destination and the redundancy destination of the record. The process of Step S722 in FIG. 17 is performed in another server 10, in accordance with the process of the Step S803.

Regarding a state realized by the above-described processing procedures, an example of specific cases will be described.

A first case is a case where many terminals 20 are coupled to the server 10a, and thus wireless communication of the server 10a is unstable, but there is no problem in providing of the service 11a by the server 10a. In this case, the terminal 20 in which wireless communication with the server 10a is cut off switches coupling so as to be coupled to the other server 10 set as the connecting destination-at-cutoff. The original server 10a is notified of coupling of the terminal 20 to the other server 10. The server proxy unit 14 of the other server 10 relays an access request to the service 11a from the terminal proxy unit 22 of the terminal 20, to the service 11. If the concentration of coupling of the terminal 20 to the server 10a is continuously concentrated, the number of terminals 20 in which wireless communication with the server 10a is cut off increases and the number of terminals 20 which switch coupling so as to be coupled to the other server 10 also increases. Coupling of each of the terminals 20 being switched is transmitted to the original server 10a, and thus the server 10a can recognize the occurrence of trouble in wireless communication. For example, the server 10a determines that trouble in wireless communication occurs if the switching number exceeds the threshold value α, and the server 10a transmits an instruction (cut-off request) of switching to some or all of terminals 20 which are currently being coupled. Thus, the wireless communication network which has been unstable is stabilized. If there is a terminal 20 in which switching of coupling continues among the terminals after the instruction of switching, this means that the unstable state continues. Thus, an instruction of switching of coupling is performed more often.

A second case is a case where wireless communication of the server 10a is stable, but the server 10a has high load, and thus providing of the service 11a is not allowed. For example, failure of an access of the server proxy unit 14 of the server 10a to the service 11a causes the service 11a to be redundant in another server 10, and causes the relay destination of the access request for the service 11a to be changed in the server proxy unit 14 of each of the servers 10. Thus, the terminal 20 can continuously use the service 11a. Because a high-load state of the server 10a is released, the service 11a is operated, the server proxy unit 14 of each of the servers 10 is notified of a change of the relay destination of the access request for the service 11a, and the relay destination of the server 10a to the service 11a is restored.

In the above descriptions, an example in which each of the servers 10 manages the terminal connecting-state information is described. However, the terminal connecting-state information may be unitarily managed by one management server. In this case, each of the servers 10 transmits the synchronization request in Step S503 of FIG. 14 to the management server. Each of the servers 10 is coupled to the management server, and thus can receive an instruction from the management server. If the management server detects the server 10 in which the switching number exceeds the threshold value α, based on the terminal connecting-state information, the management server transmits a cutoff instruction of the terminal 20 to the server 10. The management server is prepared, and thereby each of the servers 10 does not have to notice the presence of another server 10, or to hold information of another server 10 in advance.

The access point AP and the server 10 may or may not necessarily have one-to-one correspondence. For example, three servers 10 may correspond to five access points AP or four servers 10 may correspond to two access points AP. When the servers 10 and the access points AP are separated from each other, the number of the separated servers and access points may be freely determined. The SSID used for coupling of the terminal 20 and the server 10 are prepared so as to be fixed. For example, in a case where the number of access points AP is 5 and the number of servers 10 is 3, an SSID 1 and the server 10a form a pair, an SSID 2 and the server 10b form a pair, and an SSID 3 and the server 10c form a pair. AN SSID 4 and an SSID 5 are not used as a first connecting destination, but may be used as a connecting destination when cutoff is performed.

In the embodiment, an example in which identification information of each wireless communication network, which is detected by the terminal 20 is an SSID is described. However, the identification information may be appropriately changed in accordance with a method of wireless communication. For example, a BSSID or a MAC address may be used as the identification information. The method of wireless communication is not limited to a wireless LAN. Other communication methods such as Bluetooth (registered trademark) may be used.

As described above, according to the embodiment, if it is detected that the wireless communication network of a certain server 10 is unstable, the certain server 10 switches the connecting destination of the terminal 20 which is currently being coupled. As a result, it is possible to release a state where wireless communication is unstable. Each of the terminals 20 in which an instruction of switching the connecting destination is performed can continuously use the original service 11 via the server 10 set as the connecting destination-at-cutoff.

In the embodiment, if use of the service 11 is not allowed in a state where the wireless communication network is stable, the service 11 is caused to be redundant and the access destination of an access request to the service 11 is switched to the redundancy destination. That is, another server 10 provides the service 11. Accordingly, in this case, the terminal 20 can also substantially continue to use the original service 11 through the server 10 set as a substitute destination.

In this embodiment, the server 10 is an example of an information processing apparatus. The connecting destination-at-cutoff information is an example of the connecting destination information. The notifications n6 and n7 in FIG. 4 and the synchronization request in FIG. 14 are an example of notification information. The terminal connecting management unit 12 is an example of a first reception unit and a notification unit. The connecting-destination determination unit 13 is an example of determination units. The connecting-state synchronization unit 15 is an example of a second reception unit.

## Claims

1. A communication method performed by an information processing apparatus, the communication method comprising:
first receiving identification information of each wireless communication network, the identification information being detected by one or more terminals coupled to the information processing apparatus through wireless communication;
first determining other information processing apparatus which corresponds to the received identification information and is different from the information processing apparatus to be a connecting destination of a first terminal when wireless communication between the information processing apparatus and the first terminal among the one or more terminals is cut off;
first notifying the first terminal of connecting destination information for coupling to the other information processing apparatus;
second receiving notification information from the other information processing apparatus in a case where the first terminal is coupled to the other information processing apparatus based on the connecting destination information, the notification information indicating that the other information processing apparatus is coupled with the first terminal; and
second determining whether or not wireless communication with a second terminal among the one or more terminals except for the first terminal is to be cut off, based on the notification information, the second terminal being coupled to the information processing apparatus.

2. The communication method according to claim 1, further comprising:
cutting off the wireless communication with a second terminal when it is determined that the wireless communication with a second terminal is to be cut off by the second determining.

3. The communication method according to claim 1, wherein
the second determining determines that the wireless communication with the second terminal is to be cut off in a case where a number of terminals indicating that the wireless communication with the information processing apparatus were cut off exceeds a threshold value.

4. The communication method according to claim 1, further comprising:
providing a service in accordance with a use request for services relayed by the other information processing apparatus, in a case where the first terminal coupled to the other information processing apparatus based on the connecting destination information transmits a use request for services allowed to be provided by the information processing apparatus, to the other information processing apparatus.

5. The communication method according to claim 1, further comprising:
specifying destination information of a service of a substitute destination by causing the other information processing apparatus as a substitute to provide the service in a case where using the service, among the services allowed to be provided by the information processing apparatus, defined as a use target by a terminal coupled to the information processing apparatus through wireless communication is not allowed; and
second notifying the other information processing apparatus of the specified destination information of the substitute destination.

6. A program which, when executed on an information processing apparatus, causes the information processing apparatus to carry out the service redundancy method according to any of claims 1 to 5.

7. An information processing apparatus comprising:
a memory configured to store the program according to claim 6; and
a processor coupled to the memory and configured to execute the program in the memory.

8. A system comprising:
the information processing apparatus according to claim 7; and
the other information processing apparatus coupled by the first terminal when the wireless communication between the information processing apparatus and the first terminal is cut off.

9. The system according to claim 8, wherein the other information processing apparatus transmits the notification information to the information processing apparatus in a case where the first terminal is coupled to the other information processing apparatus based on the connecting destination information.
